(19) Europäisches Patentamt
European Patent Office
Office européen des brevets

(11)     EP 2 637 040 B1

(12)     **FASCICULE DE BREVET EUROPEEN**

(45) Date de publication et mention
de la délivrance du brevet:
**09.09.2015   Bulletin 2015/37**

(51) Int Cl.:
***G01S 19/21*** *(2010.01)*     ***G01S 19/40*** *(2010.01)*

(21) Numéro de dépôt: **13158413.8**

(22) Date de dépôt: **08.03.2013**

(54) **Procédé adaptatif d'estimation du contenu électronique de l'ionosphère**

Adaptives Schätzungsverfahren des elektronischen Inhalts der Ionosphäre

Adaptive method for estimating the electronic content of the ionosphere

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **09.03.2012   FR 1200717**

(43) Date de publication de la demande:
**11.09.2013   Bulletin 2013/37**

(73) Titulaire: **Thales**
**92200 Neuilly Sur Seine (FR)**

(72) Inventeurs:
 • **Trilles, Sébastien**
   **31000 Toulouse (FR)**
 • **Bertin de la Hautiere, Gonzagues**
   **31400 Toulouse (FR)**
 • **Van den Bossche, Mathias**
   **31120 Goyrans (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2007/032947     US-A- 5 428 358
US-A1- 2006 017 610**

 • **XINGLIANG HUO ET AL: "Monitoring the Daytime
Variations of Equatorial Ionospheric Anomaly
Using IONEX Data and CHAMP GPS Data", IEEE
TRANSACTIONS ON GEOSCIENCE AND
REMOTE SENSING, IEEE SERVICE CENTER,
PISCATAWAY, NJ, US, vol. 49, no. 1, 1 janvier
2011 (2011-01-01), pages 105-114, XP011340485,
ISSN: 0196-2892, DOI: 10.1109/TGRS.
2010.2055875**
 • **WAYAN SUPARTA: "Proposed physical
mechanism for upper-lower atmospheric
coupling from GPS perspective", SPACE
SCIENCE AND COMMUNICATION (ICONSPACE),
2011 IEEE INTERNATIONAL CONFERENCE ON,
IEEE, 12 juillet 2011 (2011-07-12), pages 125-129,
XP032052047, DOI: 10.1109/ICONSPACE.
2011.6015866 ISBN: 978-1-4577-0563-2**
 • **WALTER F ET AL: "Brazilian contributions to the
study of the ionosphere: Electron Content",
MICROWAVE AND OPTOELECTRONICS
CONFERENCE (IMOC), 2009 SBMO/IEEE MTT-S
INTERNATIONAL, IEEE, PISCATAWAY, NJ, USA,
3 novembre 2009 (2009-11-03), pages 1-5,
XP031646821, ISBN: 978-1-4244-5356-6**

**Description**

La présente invention concerne le domaine des procédés d'estimation du contenu électronique de l'ionosphère apte à établir des corrections pour les systèmes de navigation, et plus particulièrement un procédé adaptatif permettant d'améliorer l'estimation de ce contenu électronique dans le cas de fortes hétérogénéités de l'ionosphère.

Dans les systèmes de positionnement par satellites, communément appelé GNSS pour son acronyme anglo-saxon, *Global Navigation Satellite System,* un récepteur fixe ou mobile tel qu'un véhicule ou un aéronef, est localisé par trilatération au moyen d'un calcul des distances le séparant de plusieurs satellites. La précision de l'évaluation de distance entre le récepteur et chacun des satellites est déterminante dans la précision du positionnement obtenu. La principale source d'erreur sur l'évaluation de cette distance est le retard accumulé par le signal lorsqu'il traverse l'ionosphère, où l'ionisation partielle des gaz à haute altitude perturbe la propagation du signal et entraine un délai de transmission variable.

Il est nécessaire de pouvoir disposer d'une estimation du contenu électronique de l'ionosphère terrestre, communément appelé TEC, pour son acronyme anglo-saxon *Total Electron Content,* pour prendre en compte pour chaque signal de satellite considéré le retard accumulé lors de la traversée de l'ionosphère. En pratique, le récepteur calcule sa position en intégrant plusieurs corrections des distances apparentes transmises par les satellites, au moyen de diverses techniques d'intégration et de filtrage. L'estimation du contenu électronique de l'ionosphère permet une amélioration de la précision du calcul du point (position, vitesse, datation).

Pour cela, les systèmes GNSS connus peuvent être complétés par des systèmes dits d'augmentation qui délivrent en temps réel des corrections en lien avec l'activité de l'ionosphère. Des systèmes d'augmentation basées sur des satellites, communément appelé SBAS pour son acronyme anglo-saxon *Satellite-Based Augmentation System,* sont utilisés. C'est le cas par exemple du système EGNOS pour l'Europe qui diffuse à partir de plusieurs satellites géostationnaires des données de corrections à destination des systèmes GPS.

Diverses méthodes sont envisagées pour permettre une estimation du contenu électronique de l'ionosphère et prendre en compte son impact sur les systèmes de navigation. Dans une approche connue, communément appelé modèle TRIN pour son acronyme anglo-saxon *TRiangular INterpolation,* l'ionosphère est assimilée à une couche mince autour du globe terrestre dans laquelle est accumulée la totalité de la charge électronique de l'ionosphère.

Le retard d'un signal émis par un satellite, situé à une altitude supérieure à la couche mince, vers un récepteur situé à plus basse altitude que la couche mince, est alors estimé au moyen du point d'intersection de la couche mince avec l'axe de transmission du signal, aussi appelée ligne de vue, du satellite au récepteur. Ce point est communément appelé IPP pour son acronyme anglo-saxon *Ionosphere Pierce Point.* On détermine le retard d'un signal traversant la couche mince à un point IPP donné au moyen du contenu électronique total vertical déterminé en ce point pour un utilisateur mono-fréquence. Le contenu électronique total vertical, ou VTEC, pour son acronyme anglo-saxon *Vertical Total Electron Content,* représente la charge électronique totale de l'ionosphère qu'aurait perçu un signal passant par cet IPP et traversant la couche mince selon un axe vertical.

L'estimation du contenu électronique total vertical VTEC permet d'établir une cartographie des retards ionosphérique sous la forme d'une grille sphérique centrée sur la terre, située en altitude et immobile par rapport à la terre. L'utilisateur va alors se servir de cette grille, communément appelée grille IONO, pour calculer le retard ionosphérique sur les lignes de vue de chaque satellite considéré, par interpolation linéaire sur cette grille. Une mise à jour régulière des valeurs de la grille IONO, typiquement toutes les 30 secondes, est diffusée par les systèmes SBAS à destination des utilisateurs du système de navigation.

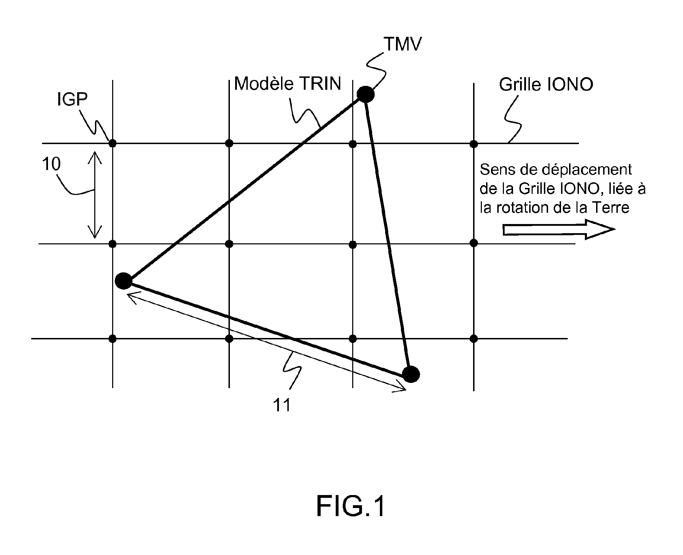

Selon une méthode connue, la grille IONO qui est accessible aux utilisateurs des systèmes de navigation, est calculée par interpolation à partir d'un second maillage cartographiant les mesures du contenu électronique total vertical VTEC. Contrairement à la grille IONO, ce second maillage n'est pas liée à la rotation de la terre. Le second maillage est à un temps solaire fixe, l'exposition au soleil de chacun des noeuds du maillage étant constante. Le maillage s'affranchit ainsi des évolutions fortes de la couche ionosphérique au cours d'une journée. Dans l'approche connue sous le nom de modèle TRIN le second maillage est formé d'un polyèdre régulier centré sur la terre possédant mille deux cent quatre vingts faces triangulaires. A chacun des six cent quarante deux sommets positionnés autour du globe terrestre est associé une évaluation du contenu électronique total vertical VTEC. La figure 1 illustre en vue de dessus les maillages de la grille IONOet du polyèdre du modèle TRIN. Les noeuds de la grille IONO sont dénommés IGP, pour l'acronyme anglo-saxon *Ionospheric Grid Point,* les noeuds du polyèdre du modèle TRIN sont dénommés TMV, pour l'acronyme anglo-saxon *Trin Model Vertex.* Typiquement, la distance 10 séparant deux noeuds IGP est d'environ 550km a l'équateur, cette distance diminuant en fonction de la lattitude. La distance 11 séparant deux noeuds TMV est d'environ 950km.

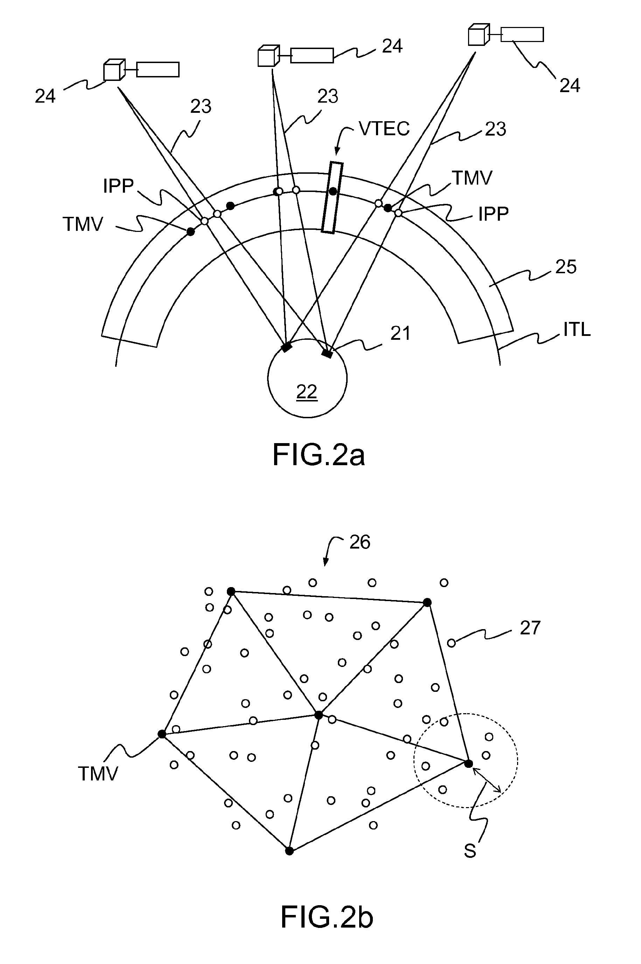

Les figures 2.a et 2.b illustrent le principe du procédé d'estimation du contenu électronique de l'ionosphère aujourd'hui mis en oeuvre pour la correction des systèmes de navigation.

Une pluralité de balises réceptrices 21 situées sur la surface du globe terrestre 22 capte un ensemble de signaux 23 émis par une pluralité de satellite de navigation 24 situés en orbite. L'ionosphère 25 est assimilée à une couche mince autour du globe terrestre dans laquelle est accumulée la totalité de la charge électronique. On appelle ITL, pour son acronyme anglo-saxon *Ionosphere Thin Layer,* la surface, par exemple sphérique, de la couche mince. Les sommets TMV d'un polyèdre dit IPM pour son acronyme anglo-saxon *Ionosphere Polyhedral Mesh* forme le maillage du modèle TRIN. Les sommets TMV sont positionnés sur la surface ITL.

On sait que la réception par une balise 21 d'un signal 23 émis par un satellite 24 sur deux fréquences, par exemple les fréquences GPS L1 et GPS L2, permet, par une technique connue de l'homme du métier de déterminer la distance entre la balise 21 et le satellite 24, ainsi que le contenu électronique total le long de l'axe de transmission du signal. Pour plus de détails sur cette technique, on pourra se référer à l'ouvrage « Understanding GPS Principes and Applications », Elliott D. Kaplan, 2005, Artech House,

Selon cette technique, il est possible, pour chaque signal 23 bi-fréquences de déterminer une estimation du contenu électronique total vertical VTEC, pour le point IPP d'intersection entre l'axe de transmission du signal 23 et la surface ITL.

Comme représenté sur la figure 2.b, la collecte d'un ensemble de mesures réalisées par une pluralité de balises réceptrices 21 réceptionnant des signaux radiofréquences émis par une pluralité de satellites de navigation émetteurs 24 situés en orbite, permet de construire un nuage 26 de points 27 sur la surface ITL; chaque point 27 du nuage 26 étant caractérisé par des coordonnées spatiales de l'IPP et par une estimation du contenu électronique total vertical VTEC en ce point.

Dans une méthode connue, une estimation du contenu électronique total vertical $VTEC_i$ en chacun des sommets TMV du maillage IPM est réalisée au moyen d'un filtre de Kalman à partir d'une sélection de points 27 situés à une distance du sommet TMV inférieure à un seuil S prédéterminé.

A partir de cette cartographie de valeurs $VTEC_i$ sur le maillage IPM, on détermine une cartographie VTEC sur la grille IONO, par exemple par interpolation linéaire. Cette cartographie est ensuite rendue disponible aux utilisateurs des systèmes de navigation, par exemple au moyen des systèmes d'augmentation tel que EGNOS.

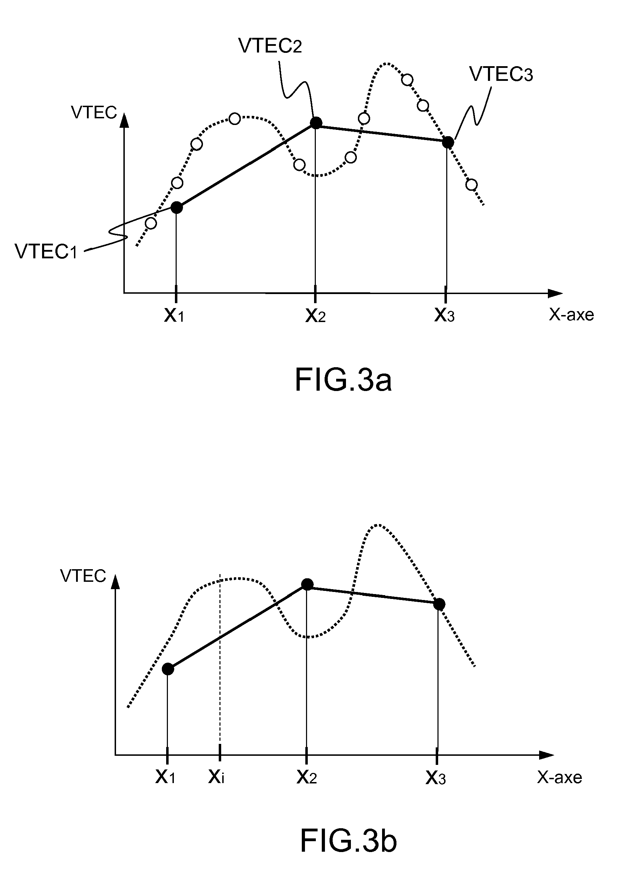

Les figures 3.a et 3.b illustrent le principe du procédé dans un cas simplifié d'une distribution monodimensionnelle. A partir d'une distribution de valeurs mesurées de VTEC associées à leurs abscisses IPP, le procédé estime des valeurs $VTEC_1$, $VTEC_2$ et $VTEC_3$ pour des abscisses prédéterminées $X_1$, $X_2$ et $X_3$ correspondant aux sommets TMV dans le cas simplifié d'un maillage monodimensionnel.

Typiquement, le calcul de $VTEC_2$ est contraint par la nécessité de faire passer une droite par le point $VTEC_1$ à l'abscisse $X_1$ et une autre par le point $VTEC_3$ à l'abscisse $x_3$, ainsi que par la contrainte de positionner $VTEC_2$ au plus près du nuage de point. Le procédé est répété successivement pour chacun des points le long de l'axe d'abscisse. Comme représenté sur la figure 3.b, l'estimation du contenu électronique total pour une abscisse $X_i$ donnée au moyen des points supports $X_1$, $X_2$ et $X_3$ peut selon les cas s'avérer relativement éloignée des mesures de contenu électronique total. Les figures 3.a et 3.b illustrent deux limites de l'approche actuellement mise en oeuvre : L'erreur commise sur l'estimation du contenu électronique total sur les noeuds du maillage et la non linéarité de l'estimation du contenu électronique total à proximité des noeuds du maillage.

Le procédé d'estimation du contenu électronique de l'ionosphère actuellement mis en oeuvre permet un calcul de positionnement dont la précision est suffisante lorsque les hétérogénéités du contenu électronique de l'ionosphère sont faibles. En revanche, lorsque l'ionosphère présente une activité plus importante, par exemple lors des pics d'activité solaire, on constate des hétérogénéités de fortes amplitudes à l'intérieur de faibles surfaces géographiques. Les méthodes d'estimation du contenu électronique ionosphérique existantes, comme le modèle TRIN, ne permettent pas une estimation suffisamment précise pour générer des corrections fiables, et permettre un positionnement satisfaisant par les utilisateurs des systèmes de navigation. On connait en particulier les documents de brevets US 5,428,358, WO2007/032947 et US2006/017610 ainsi que la publication de Xingliang Huo et al. intitulé « Monitoring the Daytime Variations of Equatorial Ionospheric Anomaly Using IONEX Data and Champ GPS Data », IEEE Transactions, Vol 49 n°1, 2011-01-01. Ces documents illustrent l'art antérieur connu à la date de la présente invention.

L'invention vise à proposer une solution alternative pour l'estimation du contenu électronique total de l'ionosphère en palliant les difficultés de mise en oeuvre citées ci-dessus.

A cet effet, l'invention a pour objet un procédé adaptatif d'estimation du contenu électronique de l'ionosphère **caractérisé en ce qu'il** comporte les étapes suivantes réalisées successivement :

- une collecte d'un ensemble de mesures réalisées par plusieurs balises réceptrices fixes au sol réceptionnant des signaux radiofréquences émis par plusieurs satellites de navigation émetteurs situés en orbite,
- un calcul, pour chacun des signaux de l'ensemble de mesures, des coordonnées spatiales du point d'intersection entre un axe de transmission du signal et une surface entourant la terre, et d'un contenu électronique total vertical déterminé en ce point d'intersection; un nuage de points, constitués des coordonnées spatiales du point d'intersection et d'un contenu électronique total vertical étant ainsi défini,
- un calcul, au moyen d'un estimateur statistique, d'un contenu électronique total vertical, pour chacun des noeuds d'un maillage initial de la surface,

- une analyse statistique de dispersion du contenu électronique total vertical en chacun des noeuds du maillage initial, permettant de sélectionner entre deux niveaux de perturbation prédéterminés, une perturbation faible ou une perturbation forte, de l'ionosphère,
- une étape comportant :

  • dans le cas d'une perturbation faible, un calcul permettant de définir un estimateur statistique adapté, à partir de l'estimateur statistique initial,
  • dans le cas d'une perturbation forte, un calcul permettant de générer un nouveau maillage adapté de la surface, à partir du maillage initial,

- une analyse statistique d'erreur du contenu électronique total vertical déterminé, au moyen de l'estimateur statistique adapté et du maillage initial dans le cas d'une pertubation faible, ou au moyen de l'estimateur statistique initial et du maillage adapté dans le cas d'une pertubation forte; l'analyse statistique d'erreur permettant de sélectionner entre deux niveaux d'erreurs prédéterminés, une erreur faible qui implique une validation de l'adaptation du procédé, ou une erreur forte qui implique l'arrêt du procédé.

L'invention sera mieux comprise et d'autres avantages apparaîtront à la lecture de la description détaillée des modes de réalisation donnés à titre d'exemple sur les figures suivantes.

La figure 1, déjà présentée, illustre en vue de dessus les maillages de la grille IONO et du modèle TRIN ainsi que les terminologies associées,
les figures 2.a et 2.b, déjà présentées, illustrent le principe d'un procédé connu d'estimation du contenu électronique de l'ionosphère,
les figures 3.a et 3.b, déjà présentées, illustrent le principe du procédé dans un cas simplifié d'une distribution monodimensionnelle,
la figure 4 illustre sous la forme d'un organigramme un mode de réalisation privilégié du procédé adaptatif d'estimation du contenu électronique de l'ionosphère selon l'invention,
les figures 5.a et 5.b illustrent le principe de l'analyse statistique de dispersion du contenu électronique de l'ionosphère,
la figure 6 illustre le principe de l'analyse taxonomique d'une distribution de point autour d'un noeud de maillage,
les figures 7.a et 7.b illustrent le principe d'un raffinement du maillage dans le cas d'une distribution agrégeable,
les figures 8.a et 8.b illustrent le principe d'un raffinement du maillage dans le cas d'une distribution stochastique,
les figures 9.a et 9.b illustre le principe du procédé adaptatif selon l'invention dans un cas simplifié d'une distribution monodimensionnelle.

Par souci de clarté, les mêmes éléments porteront les mêmes repères dans les différentes figures.

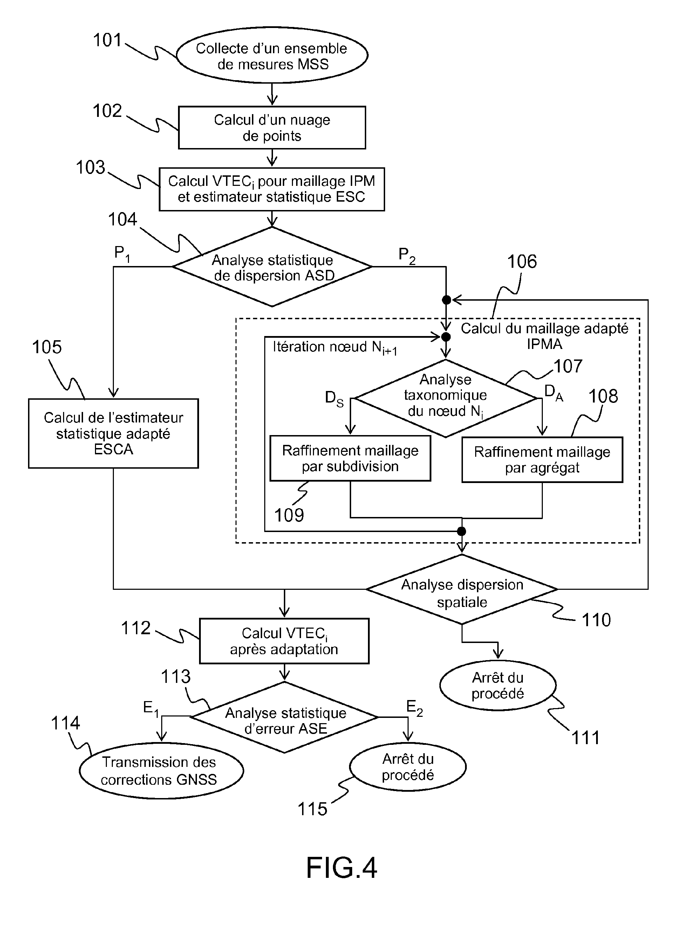

La figure 4 illustre sous la forme d'un organigramme un mode de réalisation privilégié du procédé adaptatif d'estimation du contenu électronique de l'ionosphère selon l'invention.
Selon l'invention, le procédé comporte une **étape 101** de collecte d'un ensemble de mesures MSS réalisées par plusieurs balises réceptrices 21 fixes au sol réceptionnant des signaux radiofréquences 23 émis par plusieurs satellites de navigation émetteurs 24 situés en orbite.
Sur le même principe que précédemment décrit pour la figure 2.a, la réception par la balise 21 du signal 23 émis sur deux fréquences $f_1$ et $f_2$, permet de déterminer deux pseudo-distances $d_1$ et $d_2$ entre la balise 21 et le satellite 24, au moyen de la formule simplifiée suivante, dépourvue d'erreur de mesures avec des horloges parfaites :

$$d_i = D + STEC / f_i^2 + T \qquad (i)$$

dans laquelle STEC représente le contenu électronique total le long de la ligne de vue du signal 23 et T représente le retard accumulé par le signal lorsqu'il traverse la troposphère. L'ensemble de mesures MSS comprend pour chaque signal 23, au moins une distance, une valeur TEC et des coodonnées spatiales de la ligne de vue du signal.
Le procédé comporte une **étape 102** de calcul pour chacun des signaux 23 de l'ensemble de mesures MSS, des coordonnées spatiales du point d'intersection IPP entre un axe de transmission du signal 23 et une surface ITL centrée sur la terre, et d'un contenu électronique total vertical VTEC déterminé en ce point d'intersection IPP. Un nuage 26 de points 27 est ainsi défini ; chaque point 27 étant constitué des coordonnées spatiales du point d'intersection IPP et d'un contenu électronique total vertical VTEC.
Une estimation du contenu électronique total vertical VTEC en un point IPP est déterminée, à partir d'un ensemble de mesures MSS, au minimum deux utilisant des fréquences différentes, par une technique connue de l'homme du métier basée sur la formule suivante :

$$STEC(\varepsilon) = VTEC\ s(\varepsilon) \qquad\qquad (ii)$$

dans laquelle $s(\varepsilon)$ est une fonction de rabattement dépendante de $\varepsilon$ représentant l'inclinaison de la ligne de vue. On pourra se reporter à la publication "Minimum Operational Performance Standards for Global Positioning System / Wide Area Augmentation System Airborne Equipment : RTCA DO-229D" publiée en décembre 2006 par RTCA, "Radio Technical Commission for Aeronautics" détaillant ce mode de calcul.

Dans un mode de réalisation préféré de l'invention, la surface ITL utilisée dans le modèle TRIN est mise en oeuvre. Ce choix présente plusieurs avantages comme cela est décrit par la suite. Toutefois, l'invention ne se limite pas à cette surface ; toute surface entourant la terre, par exemple une surface compacte sans bord centrée sur la terre 22, étant possible. Avantageusement, une surface homéomorphe à une sphère positionnée en altitude est mise en oeuvre.

Le procédé comporte une **étape 103** de calcul, au moyen d'un estimateur statistique ESC, d'un contenu électronique total vertical $VTEC_i$ pour chacun des noeuds $N_i$ d'un maillage initial IPM de la surface ITL. Dans un mode de réalisation préféré de l'invention, le maillage initial IPM utilisé dans le modèle TRIN est mis en oeuvre. Le maillage IPM forme ainsi un polyèdre régulier centré sur la terre possédant mille deux cent quatre vingts faces triangulaires. Les noeuds $N_i$ du maillage correspondent aux six cent quarante deux sommets TMV positionnés autour du globe terrestre. Le maillage IPM n'est pas lié à la rotation de la terre, chacun des noeuds est à un temps solaire fixe.

Le choix d'un maillage initial IPM correspondant au maillage utilisé dans le modèle de TRIN présente plusieurs avantages comme cela est décrit par la suite. Toutefois, l'invention ne se limite pas au maillage IPM; tout type de maillage de la surface ITL est possible, les noeuds pouvant être à un temps solaire fixe ou non et en nombre variable.

Avantageusement, l'estimateur statistique ESC détermine un contenu électronique total vertical $VTEC_i$ en chacun des noeuds $N_i$ du maillage IPM, au moyen d'un filtre de Kalman prenant en compte les points 27 du nuage 26 positionnés à une distance du noeud considéré $N_i$ inférieure à un seuil prédéterminé S.

Le procédé comporte **une étape 104** d'analyse statistique de dispersion ASD du contenu électronique total vertical $VTEC_i$ en chacun des noeuds $N_i$ du maillage initial IPM, permettant de sélectionner entre deux niveaux de perturbation prédéterminés, une perturbation faible $P_1$ ou une perturbation forte $P_2$, caractéristiques de l'activité de l'ionosphère.

Avantageusement, l'étape 104 d'analyse statistique de dispersion ASD comporte les étapes suivantes réalisées successivement :

- une sélection pour chacun des noeuds $N_i$ du maillage initial IPM d'un sous-ensemble $SEP_i$ de points 27 positionnés à une distance du noeud considéré $N_i$ inférieure à un seuil prédéterminé $S_1$,
- un calcul pour chacun des noeuds $N_i$ du maillage initial IPM d'une dispersion locale $D_i$ calculée par méthodes statistiques, telles que par exemple une covariance ou un résidu de moindre carré, du contenu électronique total vertical VTEC des points 27 du sous-ensemble $SEP_i$,
- une sélection entre les deux niveaux de perturbations de l'ionosphère, $P_1$ ou $P_2$ en fonction d'une valeur de dispersion locale $D_i$.

Avantageusement, l'analyse statistique de dispersion ASD peut être limitée à une partie du maillage de la surface ITL, par exemple en ne conservant que les noeuds exposés au soleil.

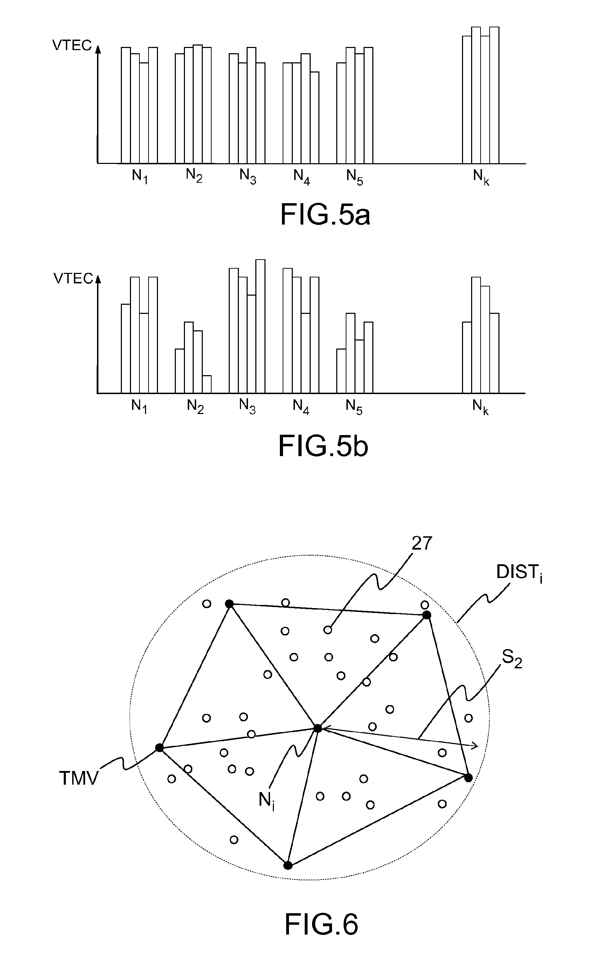

L'étape 104 d'analyse statistique de dispersion ASD est aussi illustrée par les figures 5.a et 5b décrites par la suite.

Le procédé comporte une **étape 105** de calcul d'un estimateur statistique adapté ESCA, permettant de déterminer, en plus du contenu électronique total vertical $VTEC_i$ en chacun des noeuds $N_i$, un gradient spatial d'évolution $GSE_i$ du contenu électronique total vertical à proximité du noeud considéré $N_i$. Un estimateur statistique adapté ESCA est calculé lorsqu'une perturbation faible $P_1$ est déterminée par l'analyse statistique des dispersions ASD.

Avantageusement, l'estimateur statistique adapté ESCA permet de calculer en chacun des noeuds $N_i$ du maillage IPM, une valeur de VTECi et deux pentes, déterminées dans un repère spatial prédéterminé, définissant le gradient spatial d'évolution $GSE_i$ du contenu électronique total vertical VTEC à proximité du noeud $N_i$ considéré.

Avantageusement, l'estimateur statistique adapté ESCA est déterminé au moyen d'une régression linéaire multiple apte à prendre en compte des incohérences locales des mesures de VTEC à proximité du noeud $N_i$ considéré. Ainsi, l'estimateur statistique adapté ESCA permet de limiter la non-linéarité du contenu électronique total vertical VTEC à proximité des noeuds $N_i$ du maillage IPM.

A l'issue de l'étape 105, un calcul du contenu électronique total vertical $VTEC_i$ et de son gradient spatial

d'évolution $GSE_i$ est réalisé dans une étape 112 au moyen de l'estimateur statistique adapté ESCA en chacun des points $N_i$ du maillage initial IPM.

Le procédé comporte **une étape 106** de calcul permettant de générer un nouveau maillage adapté IPMA de la surface ITL, à partir du maillage initial IPM. Dans le cas où une perturbation forte $P_2$ est déterminée par l'analyse statistique des dispersions ASD, un maillage adapté IPMA est déterminé à partir du maillage initial (IPM), selon un processus itératif appliqué à chacun des noeuds ($N_i$) du maillage initial (IPM) et comprenant des étapes de calcul 107, 108 et 109.

Dans une **étape 107,** une analyse taxonomique d'une distribution $DIST_i$ de points 27 positionnés à une distance du noeud considéré $N_i$ inférieure à un seuil prédéterminé $S_2$ permet soit :

- de définir, lorsque la distribution $DIST_i$ est agrégeable, plusieurs agrégats $SEP_{ik}$ de points 27 pour lesquelles les valeurs de contenu électronique total vertical VTEC sont homogènes, et de sélectionner une étape 108 de raffinement du maillage IPM par sous-classe $D_A$,
- de sélectionner, lorsque la distribution $DIST_i$ est stochastique, une étape 109 de raffinement du maillage IPM par subdivision $D_S$,

Avantageusement, l'étape 107 comprend aussi des moyens permettant de limiter pour chaque point $N_i$ le nombre d'agrégats $SEP_{ik}$ inférieur à un seuil prédéterminé.

L'étape 107 d'analyse taxonomique réalisée sur une distribution $DIST_i$ est aussi illustrée par la figure 6 décrite par la suite.

Le procédé comporte une **étape 108** consistant à ajouter un nouveau noeud de maillage $AMV_{ik}$ par agrégats $SEP_{ik}$ dans le cas où la distribution $DIST_i$ est agréageable. La position du nouveau noeud $AMV_{ik}$ correspond à un barycentre des points 27 de l'agrégat $SEP_{ik}$.

Cette étape permet de positionner les noeuds de maillage à proximité des optimums locaux. Le procédé s'adapte aux évolutions de l'ionosphère en recherchant périodiquement ces optimums locaux, on obtient une cartographie réaliste des hétérogénéités de l'ionosphère et de ses évolutions. Cela permet d'améliorer la précision de l'estimation de contenu électronique total à l'endroit des noeuds de maillage et d'assurer une évolution linéaire à proximité des noeuds.

Dans un premier mode de réalisation, la position d'un nouveau noeud $AMV_{ik}$ correspond à l'iso-barycentre des points 27; une pondération identique en chaque point 27 étant retenue.

Dans un second mode de réalisation, la position d'un nouveau noeud $AMV_{ik}$ dans le cas d'une distribution DIST agréageable, correspond au barycentre des points 27 de l'agrégat $SEP_{ik}$ dont la pondération $P_{ik}$ dépend d'un angle formé entre l'axe de transmission du signal 23 du point considéré 27 et un axe vertical par rapport à la terre 22 passant par ce point 27. La pondération permet ainsi de favoriser les points 27 déterminés à partir d'un signal 23 dont l'axe de transmission est sensiblement vertical ; les mesures de VTEC en ces points étant a priori plus précises. Ce mode de réalisation est particulièrement avantageux car il permet d'utiliser les points les plus fiables.

Avantageusement, l'étape 108 comporte en outre un ou plusieurs critères de cohérence géométrique dans le but de générer un maillage IPMA le plus adapté à la dynamique de l'ionosphère. Un premier critère de cohérence géométrique consiste à supprimer les noeuds $N_i$ du maillage initial IPM positionnés à une distance d'un nouveau noeud $AMV_{ik}$, inférieure à un seuil prédéterminé. Un second critère de cohérence géométrique consiste à supprimer les nouveaux noeuds $AMV_{ik}$ générés hors d'une zone prédéterminée.

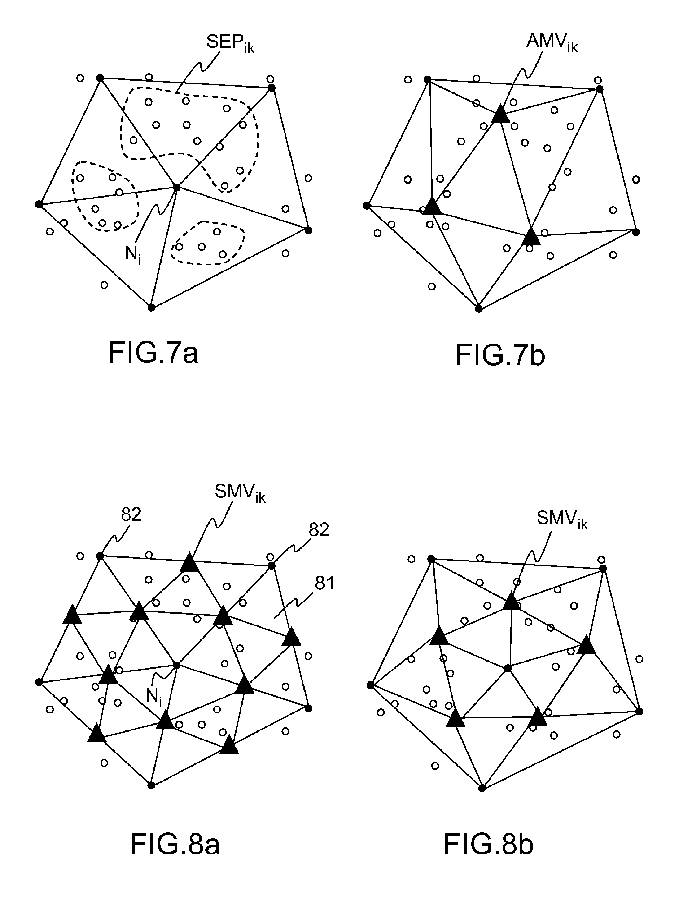

L'étape 108 de raffinement du maillage par sous-classe est aussi illustrée par les figures 7.a et 7.b décrites par la suite.

Le procédé comporte une **étape 109** consistant à ajouter plusieurs nouveaux noeuds de maillage $SMV_{ik}$ dans le cas où la distribution $DIST_i$ est stochastique ; le nombre et la position des nouveaux noeuds $SMV_{ik}$ étant défini en fonction des noeuds existants $N_i$ et d'une règle de subdivision prédéterminée.

Plusieurs techniques de subdivisions sont envisageables selon l'invention. Les figures 8.a et 8.b présente deux modes de réalisation du raffinement de maillage par subdivision. Les faces auxquelles $N_i$ appartient sont repérées 81. Les noeuds voisins auquel Ni est connecté sont repérés 82.

Selon un premier mode de réalisation, un nouveau noeud $SMV_{ik}$ est positionné entre le noeud considéré $N_i$ et chacun des noeuds voisins 82 qui lui sont connectés. Chaque nouveau noeud $SMV_{ik}$ est positionné sur la surface ITL, à égale distance du noeud $N_i$ et du noeud voisin considéré 82, de façon à minimiser la distance le séparant du noeud considéré $N_i$.

Selon un second mode de réalisation, un nouveau noeud $SMV_{ik}$ est positionné pour chacune des faces 81 auxquelles appartient le noeud considéré $N_i$. La position du nouveau noeud $SMV_{ik}$ correspondant à un barycentre des noeuds $N_i$ et 82 de la face considérée 81.

L'étape 109 de raffinement du maillage par subdivision est aussi illustrée par les figures 7.a et 7.b décrites par la suite.

Le procédé comporte une **étape 110,** réalisée à l'issue du processus itératif de l'étape 106 consistant à comparer des dispersions spatiales des nouveaux noeuds $AMV_{ik}$ et $SMV_{ik}$ du maillage adapté IPMA et des noeuds $N_i$ du maillage initial IPM. Cette étape a pour but de définir un critère permettant de valider, de poursuivre ou d'interrompre le raffinement du maillage, réalisé par les étapes 107, 108, 109.

Le principe du calcul est le suivant :

- Si $\sigma_i$ représente la dispersion spatiale d'un noeud $N_i$ déterminé pour $n_i$ points 27,
- Si $\sigma_{ik}$ représente la dispersion spatiale d'un nouveau noeud $AMV_{ik}$ (ou $SMV_{ik}$) déterminé pour $n_{ik}$ points 27,

Dans un mode de réalisation, le nouveau maillage adapté IPMA apporte une amélioration par rapport au maillage initial IPM, dès lors que :

$$\sigma_{ik} \cdot \chi_{n_{ik}}(AMV_{ik}) < \sigma_i \cdot \chi_{n_i}(N_i) \qquad \text{(iii)}$$

où le paramètre $\chi$ permet de pondérer les dispersions par le nombre de points 27 disponibles pour le calcul de dispersion.

Selon l'invention, l'étape 110 comporte une sélection des étapes suivantes :

- le calcul, dans une étape 112, du contenu électronique total vertical $VTEC_i$ en chacun des noeuds du maillage adapté IPMA au moyen de l'estimateur statistique ESC, dans le cas où les dispersions spatiales des nouveaux noeuds $AMV_{ik}$ et $SMV_{ik}$ sont inférieures aux dispersions spatiales des noeuds $N_i$ du maillage initial IPM ; ou autrement dit lorsque la relation (iii) est satisfaite.
- l'arrêt du procédé, dans une étape 111, dans le cas où les dispersions spatiales des nouveaux noeuds $AMV_{ik}$ et $SMV_{ik}$ sont supérieures aux dispersions spatiales des noeuds $N_i$ du maillage initial IPM ; ou autrement dit lorsque la relation (iii) n'est pas satisfaite.
- l'initiation d'un nouveau calcul, au moyen de l'étape 106 déjà décrite, de raffinement du maillage appliqué sur l'ensemble des noeuds du nouveau maillage IPMA, dans le cas où les dispersions spatiales des nouveaux noeuds $AMV_{ik}$ et $SMV_{ik}$ sont à la fois inférieures aux dispersions spatiales des noeuds $N_i$ du maillage initial IPM et supérieures à un seuil prédéterminé ; le maillage étant considéré améliorable.

Avantageusement, l'étape 110 comporte aussi un test sur le nombre de noeuds du maillage adapté IPMA. Lorsque ce nombre dépasse un seuil prédéterminé, le nouveau maillage IPMA n'est pas validé. Le procédé est interrompu dans l'étape 111.

Le procédé comporte une **étape 111** consistant à interrompre l'adaptation du procédé au profit du procédé précédemment définit comme par exemple le modèle de TRIN.

Le procédé comporte une **étape 112** consistant à :

- calculer, dans le cas d'une perturbation faible ($P_1$), un contenu électronique total vertical $VTEC_i$ et son gradient spatial d'évolution $GSE_i$ au moyen de l'estimateur statistique adapté ESCA pour le maillage initial IPM,
- calculer, dans le cas d'une perturbation forte ($P_2$), un contenu électronique total vertical $VTEC_1$ au moyen de l'estimateur statistique initial ESC pour le maillage adapté IPMA.

Le procédé comporte une **étape 113** d'analyse statistique d'erreur ASE du contenu électronique total vertical $VTEC_i$ déterminé dans l'étape 112, au moyen de l'estimateur statistique adapté ESCA et du maillage initial IPM dans le cas d'une pertubation faible $P_1$, ou au moyen de l'estimateur statistique initial ESC et du maillage adapté IPMA dans le cas d'une pertubation forte $P_2$. L'analyse statistique d'erreur ASE permet de sélectionner entre deux niveaux d'erreurs prédéterminés, une erreur faible $E_1$ qui implique une validation de l'adaptation du procédé dans une étape 114, ou une erreur forte $E_2$ qui implique l'arrêt du procédé dans une étape 115.

Dans le cas d'une perturbation faible $P_1$, l'analyse statistique d'erreur ASE comporte les étapes suivantes réalisées successivement :

- une sélection pour chacun des noeuds $N_i$ d'un sous-ensemble $SEP_{i4}$ de points 27 positionnés à une distance du noeud considéré $N_i$ inférieure à un seuil prédéterminé $S_4$,
- un calcul pour chacun des points 27 du sous-ensemble $SEP_{i4}$ d'une différence DIFF entre le contenu électronique total vertical $VTEC_i$ déterminé au noeud $N_i$ au moyen de l'estimateur statistique ESCA et le contenu électronique total vertical VTEC du point considéré 27,
- un calcul pour chacun des noeuds $N_i$ d'une dispersion locale $D_{i4}$ des différences DIFF calculée par méthodes statistiques, telles que par exemple une covariance ou un résidu de moindre carré,

- une sélection entre deux niveaux d'erreurs prédéterminés, une erreur faible $E_1$ ou une erreur forte $E_2$, en fonction d'une valeur de dispersion locale $D_{i4}$.

Avantageusement, l'analyse statistique d'erreur ASE appliquée dans le cas d'une perturbation faible $P_1$ comporte une seconde condition apte à déterminer une erreur forte $E_2$ au moyen d'une comparaison en chacun des noeuds $N_i$ de la valeur du gradient spatial $GSE_i$ avec les valeurs de gradient spatial $GSE_i$ des noeuds voisins du noeud $N_i$ considéré. Lorsque des écarts de gradient supérieurs à un seuil prédéterminé sont détectés, une erreur forte $E_2$ est sélectionnée. Cette condition s'ajoute aux conditions précédentes.

Dans le cas d'une perturbation forte $P_2$, l'analyse statistique d'erreur ASE comporte selon un même principe, les étapes suivantes réalisées successivement :

- une sélection pour chacun des noeuds $N_i$, $AMV_{ik}$ ou $SMV_{ik}$ du maillage adapté IPMA d'un sous-ensemble $SEP_{i5}$ de points 27 positionnés à une distance du noeud considéré $N_i$, $AMV_{ik}$ ou $SMV_{ik}$ inférieure à un seuil prédéterminé $S_5$,
- un calcul pour chacun des points 27 du sous-ensemble $SEP_{i5}$ d'une différence DIF entre le contenu électronique total vertical $VTEC_i$ déterminé au noeud $N_i$, $AMV_{ik}$ ou $SMV_{ik}$ au moyen de l'estimateur statistique ESC et le contenu électronique total vertical VTEC du point considéré 27,
- un calcul pour chacun des noeuds $N_i$, $AMV_{ik}$ ou $SMV_{ik}$ d'une dispersion locale $D_{i5}$ des différences DIF calculée par méthodes statistiques, telles que par exemple une covariance ou un résidu de moindre carré,
- une sélection entre les deux niveaux d'erreurs, l'erreur faible $E_1$ ou l'erreur forte $E_2$, en fonction d'une valeur de dispersion locale $D_{i5}$.

Avantageusement, l'analyse statistique d'erreur ASE peut être limitée à une partie du maillage de la surface ITL, par exemple en ne conservant que les noeuds exposés au soleil. Avantageusement, les analyses statistiques de dispersion ASD et d'erreur ASE ne prennent en compte qu'un sous-ensemble des noeuds Ni, AMVik ou SMVik du maillage de la surface ITL sélectionné à partir d'un ou plusieurs critères géométrique ; un des critères portant par exemple sur la position des noeuds par rapport au soleil.

A l'issue de l'étape 113, une erreur faible $E_1$ permet l'utilisation, dans une **étape 114,** des valeurs $VTEC_i$ calculées aux noeuds du maillage, IPM ou IPMA. Des valeurs de corrections sur une grille utilisateur, comme par exemple la grille IONO, sont déterminées à partir de ces valeurs $VTEC_i$, par exemple par interpolation linéaire. Ces valeurs de corrections sont diffusés vers les utilisateurs des systèmes GNSS. Inversement, une erreur forte $E_2$ entraine l'arrêt du procédé dans une **étape 115** similaire à l'étape 111. Les valeurs de VTECi calculées, sont invalides et ne sont pas diffusées.

Les figures 5.a et 5.b illustrent le principe de l'analyse statistique de dispersion ASD du contenu électronique de l'ionosphère, tel que décrit pour la figure 4 dans l'étape 104 du procédé. Pour chaque noeud $N_i$ du maillage IPM, le procédé comporte une étape de sélection d'un sous-ensemble $SEP_i$ de points 27 du nuage 26 positionnés à une distance du noeud $N_i$ inférieure à un seuil prédéterminé $S_1$.

Sur la figure 5.a est représenté sous la forme d'un histogramme, les valeurs mesurées de VTEC des points 27 pour chaque sous-ensemble $SEP_i$. Le procédé comporte une étape de calcul d'une dispersion Di, dite dispersion locale, des mesures de contenu électronique total vertical du sous-ensemble $SEP_i$.

Le procédé comporte ensuite une étape de sélection entre deux niveaux de perturbations de l'ionosphère : une perturbation faible $P_1$, une perturbation forte $P_2$. Selon l'invention, la sélection entre les deux niveaux de perturbation est déterminée par un calcul dépendant d'une valeur de dispersion locale $D_i$.

Dans un mode de réalisation possible de l'invention, les dispersions locales Di sont déterminées en chacun des noeuds $N_i$ par méthodes statistiques , telles que par exemple une covariance ou un résidu de moindre carré.

Les figures 5.a et 5.b illustrent le principe de l'analyse statistique de dispersion pour deux niveaux de perturbation. Sur la figure 5.a, les dispersions sont relativement limitées, la perturbation calculée est faible. Sur la figure 5.b, les dispersions sont plus élevées, la perturbation calculée est forte.

La figure 6 illustre le principe de l'analyse taxonomique d'une distribution de point autour d'un noeud $N_i$ du maillage, tel que décrit pour la figure 4 dans l'étape 107 du procédé. La distribution $DIST_i$ comprend les points 27 du nuage 26 positionnés à une distance du noeud $N_i$ inférieure à un seuil prédéterminé $S_2$..

Les figures 7.a et 7.b illustrent le principe d'un raffinement du maillage dans le cas d'une distribution agrégeable, tel que décrit pour la figure 4 dans l'étape 108 du procédé. Une analyse taxonomique réalisée sur une distribution $DIST_i$ de points 27 permet de déterminer plusieurs agrégats $SEP_{ik}$ de points 27, tels que représentés sur la figure 7.a pour lesquelles une dispersion de contenu électronique total vertical est inférieure à un seuil prédéterminé $S_3$.

Pour chacun de ces agrégats $SEP_{ik}$ est défini un nouveau noeud $AMV_{ik}$ correspondant au barycentre des points 27 de l'agrégat $SEP_{ik}$ dont la pondération $P_{ik}$ dépend d'un angle formé entre l'axe de transmission du signal 23 du point considéré 27 et un axe vertical par rapport à la terre 22 passant par ce point 27. La pondération permet ainsi de favoriser les points 27 déterminés à partir d'un signal 23 dont l'axe de transmission est sensiblement vertical ; les mesures de VTEC en ces points étant a priori plus précises.

Ce mode de réalisation est particulièrement avantageux car il permet de positionner les noeuds de maillage à proximité des optimums locaux. Le procédé s'adapte aux évolutions de l'ionosphère en recherchant périodiquement ces optimums locaux. On obtient une cartographie réaliste des hétérogénéités de l'ionosphère et de ses évolutions. Cela permet d'améliorer la précision de l'estimation de contenu électronique total sur les noeuds de maillage et d'assurer une évolution linéaire à proximité des noeuds.

Avantageusement, le procédé comporte en outre un ou plusieurs critères de cohérence géométrique dans le but de générer un maillage IPMA le plus adapté à la dynamique de l'ionosphère. Un premier critère de cohérence géométrique consiste à supprimer les anciens noeuds $N_i$ positionnés à une distance d'un nouveau noeud $AMV_{ik}$, inférieure à un seuil prédéterminé. Un second critère de cohérence géométrique consiste à supprimer les nouveaux noeuds $AMV_{ik}$ générés hors d'une zone prédéterminée.

Les figures 8.a et 8.b illustrent le principe d'un raffinement du maillage dans le cas d'une distribution stochastique, tel que décrit sur la figure 4 dans l'étape 109 du procédé. Le maillage adapté IPMA est déterminé à partir du maillage initial IPM par subdivision. Plusieurs techniques de subdivisions sont envisageables selon l'invention. Les figures 8.a et 8.b présentent deux modes de réalisation du raffinement par subdivision. Les faces auxquelles $N_i$ appartient sont repérées 81. Les noeuds voisins auxquels Ni est connecté sont repérés 82.

Selon un premier mode de réalisation, appelé *subdivision par facette N+1,* le maillage adapté IPMA est formé par l'ajout d'un nouveau noeud $SMV_{ik}$ entre le noeud Ni considéré et chacun des noeuds voisins 82 qui lui sont connectés. Chaque nouveau noeud $SMV_{ik}$ est positionné sur la surface ITL, à égale distance du noeud $N_i$ et du noeud voisin 82 considéré ; la position du noeud $SMV_{ik}$ étant aussi définie de façon à minimiser la distance le séparant du noeud $N_i$.

Selon un second mode de réalisation, appelé *subdivision barycentrique,* le maillage adapté IPMA est formé par l'ajout d'un nouveau noeud $SMV_{ik}$ pour chacune des faces 81. La position d'un nouveau noeud $SMV_{ik}$ correspondant au barycentre des noeuds de la face considérée 81.

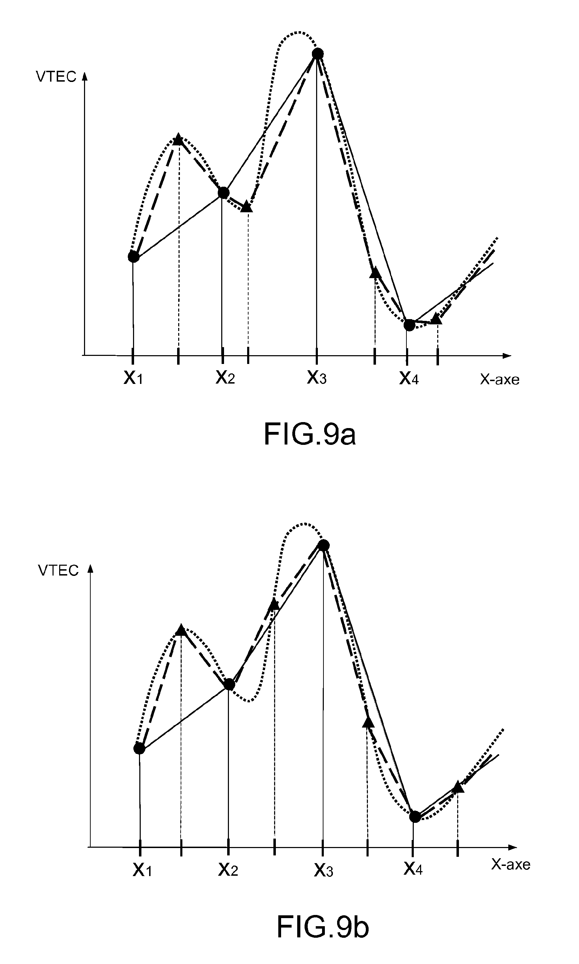

Les figures 9.a et 9.b illustre le principe du procédé adaptatif selon l'invention dans un cas simplifié d'une distribution monodimensionnelle. Comme déjà présenté pour les figures 3.a et 3.b, la figure représente, en trait pointillé, une évolution des valeurs mesurées de contenu électronique total vertical VTEC. Les procédés aujourd'hui connus permettent d'estimer des valeurs VTECi, représenté par des ronds sur les figures 9.a et 9.b pour des abscisses $x_1$, $x_2$, $x_3$ et $x_4$.

La figure 9.a illustre le principe du procédé adaptatif selon l'invention après le raffinement du maillage par agrégat. Dans ce cas, l'ajout de noeuds au maillage est réalisé pour un sous-ensemble de mesures présentant des valeurs homogènes de VTEC. Le procédé adaptatif selon l'invention permet de déterminer des valeurs supplémentaires de VTECi, représentées par des triangles, avec une précision accrue, et dans des zones correspondant à des optimum locaux.

La figure 9.b illustre le principe du procédé adaptatif selon l'invention après le raffinement du maillage par subdivision. Dans ce cas, l'ajout de noeuds au maillage est réalisé selon un critère géométrique prédéfini. Le procédé adaptatif selon l'invention améliore la précision de l'estimation des valeurs de $VTEQ_i$ en augmentant le nombre de noeud support du maillage.

## Revendications

**1.** Procédé adaptatif d'estimation du contenu électronique de l'ionosphère comprenant les étapes suivantes :

- une collecte (101) d'un ensemble de mesures (MSS) réalisées par plusieurs balises réceptrices fixes au sol (21) réceptionnant des signaux radiofréquences (23) émis par plusieurs satellites de navigation émetteurs situés en orbite (24),
- un calcul (102), pour chacun des signaux (23) de l'ensemble de mesures (MSS), des coordonnées spatiales du point d'intersection (IPP) entre un axe de transmission du signal (23) et une surface (ITL) entourant la terre, et d'un contenu électronique total vertical (VTEC) déterminé en ce point d'intersection (IPP); un nuage (26) de points (27), constitués des coordonnées spatiales du point d'intersection (IPP) et d'un contenu électronique total vertical (VTEC) étant ainsi défini ;

le procédé étant **caractérisé en ce qu'**il comprend en outre les étapes suivantes :

- un calcul (103), au moyen d'un estimateur statistique (ESC), d'un contenu électronique total vertical ($VTEC_i$), pour chacun des noeuds ($N_i$) d'un maillage initial (IPM) de la surface (ITL),
- une analyse statistique de dispersion (ASD) du contenu électronique total vertical ($VTEC_i$) en chacun des noeuds ($N_i$) du maillage initial (IPM), permettant de sélectionner entre deux niveaux de perturbation prédéter-

minés, une perturbation faible ($P_1$) ou une perturbation forte ($P_2$), de l'ionosphère,
- une étape comportant :

• dans le cas d'une perturbation faible ($P_1$), un calcul (105) permettant de définir un estimateur statistique adapté (ESCA), à partir de l'estimateur statistique initial (ESC),
• dans le cas d'une perturbation forte ($P_2$), un calcul (106) permettant de générer un nouveau maillage adapté (IPMA) de la surface (ITL), à partir du maillage initial (IPM),

- une analyse statistique d'erreur (ASE) du contenu électronique total vertical ($VTEC_i$) déterminé, au moyen de l'estimateur statistique adapté (ESCA) et du maillage initial (IPM) dans le cas d'une perturbation faible ($P_1$), ou au moyen de l'estimateur statistique initial (ESC) et du maillage adapté (IPMA) dans le cas d'une perturbation forte ($P_2$) ; l'analyse statistique d'erreur (ASE) permettant de sélectionner entre deux niveaux d'erreurs prédéterminés, une erreur faible ($E_1$) qui implique une validation de l'adaptation du procédé (114), ou une erreur forte ($E_2$) qui implique l'arrêt du procédé (115).

2. Procédé selon la revendication 1, **caractérisé en ce que** l'estimateur statistique initial (ESC), détermine un contenu électronique total vertical ($VTEC_i$) en chacun des noeuds ($N_i$, $AMV_{ik}$, $SMV_{ik}$) du maillage (IPM, IPMA), au moyen d'un filtre de Kalman prenant en compte les points (27) du nuage (26) positionnés à une distance du noeud considéré ($N_i$, $AMV_{ik}$, $SMV_{ik}$) inférieure à un seuil prédéterminé (S).

3. Procédé selon l'une des revendications précédentes, **caractérisé en ce que** le maillage initial (IPM) de la surface (ITL) forme un polyèdre régulier centré sur la terre possédant mille deux cent quatre vingts faces triangulaires, et **en ce que** chacun des noeuds ($N_i$) du maillage initial (IPM) est à un temps solaire fixe.

4. Procédé selon l'une des revendications précédentes, **caractérisé en ce que** l'analyse statistique des dispersions (ASD) comporte les étapes suivantes réalisées successivement :

- une sélection pour chacun des noeuds ($N_i$) du maillage initial (IPM) d'un sous-ensemble ($SEP_i$) de points (27) positionnés à une distance du noeud considéré ($N_i$) inférieure à un seuil prédéterminé ($S_1$),
- un calcul pour chacun des noeuds ($N_i$) du maillage initial (IPM) d'une dispersion locale ($D_i$), calculée par méthodes statistiques, du contenu électronique total vertical (VTEC) des points (27) du sous-ensemble ($SEP_i$),
- une sélection entre deux niveaux de perturbations de l'ionosphère ($P_1$, $P_2$), au moins en fonction d'une valeur de dispersion locale ($D_i$).

5. Procédé selon l'une des revendications précédentes, **caractérisé en ce qu'il** comporte une étape de calcul (105) d'un estimateur statistique adapté (ESCA), permettant de calculer, en plus du contenu électronique total vertical ($VTEC_i$) en chacun des noeuds ($N_i$), un gradient spatial d'évolution ($GSE_i$) du contenu électronique total vertical à proximité du noeud considéré ($N_i$).

6. Procédé selon l'une des revendications précédentes, **caractérisé en ce qu'il** comporte une étape (106) de calcul d'un maillage adapté (IPMA), déterminé à partir du maillage initial (IPM), selon un processus itératif appliqué à chacun des noeuds ($N_i$) du maillage initial (IPM) comprenant les étapes de calcul suivantes :

- une analyse taxonomique d'une distribution ($DIST_i$) de points (27) positionnés à une distance du noeud considéré ($N_i$) inférieure à un seuil prédéterminé ($S_3$), permettant soit :

• de définir, lorsque la distribution ($DIST_i$) est agrégeable, plusieurs agrégats ($SEP_{ik}$) de points (27) pour lesquelles les valeurs de contenu électronique total vertical (VTEC) sont homogènes, et de sélectionner une étape (108) de raffinement du maillage (IPM) par sous-classe ($D_A$),
• de sélectionner, lorsque la distribution ($DIST_i$) est stochastique, une étape (109) de raffinement du maillage (IPM) par subdivision ($D_S$),

- l'ajout d'un nouveau noeud de maillage ($AMV_{ik}$) par agrégats ($SEP_{ik}$) dans le cas où la distribution ($DIST_i$) est agréageable ; la position du nouveau noeud ($AMV_{ik}$) correspondant à un barycentre des points (27) de l'agrégat ($SEP_{ik}$),
- l'ajout de plusieurs nouveaux noeuds de maillage ($SMV_{ik}$) dans le cas où la distribution ($DIST_i$) est stochastique ; le nombre et la position des nouveaux noeuds ($SMV_{ik}$) étant défini en fonction des noeuds existants ($N_i$) et d'une règle de subdivision prédéterminée.

**7.** Procédé selon la revendication 6, **caractérisé en ce que** la position d'un nouveau noeud (AMV$_{ik}$) dans le cas d'une distribution (DIST$_i$) agréageable, correspond au barycentre des points (27) de l'agrégat (SEP$_{ik}$) dont une pondération (P$_{ik}$) dépend d'un angle formé entre l'axe de transmission du signal (23) du point considéré (27) et un axe vertical par rapport à la terre (22) passant par ce point (27) ; la pondération permettant de favoriser les points (27) déterminés à partir d'un signal (23) dont l'axe de transmission est sensiblement vertical.

**8.** Procédé selon l'une des revendications 6 ou 7, **caractérisé en ce qu'il** comporte au moins l'une des deux règles de subdivisions suivantes, permettant l'ajout de plusieurs nouveaux noeuds de maillage (SMV$_{ik}$) dans le cas d'une distribution (DIST$_i$) stochastique :

- un nouveau noeud (SMV$_{ik}$) est positionné entre le noeud considéré (N$_i$) et chacun des noeuds voisins (82) qui lui sont connectés ; chaque nouveau noeud (SMV$_{ik}$) étant positionné sur la surface (ITL), à égale distance du noeud (N$_i$) et du noeud voisin considéré (82), de façon à minimiser la distance le séparant du noeud considéré (N$_i$),
- un nouveau noeud (SMV$_{ik}$) est positionné pour chacune des faces (81) auxquelles appartient le noeud considéré (N$_i$); la position du nouveau noeud SMV$_{ik}$ correspondant à un barycentre des noeuds (N$_i$, 82) de la face considérée (81).

**9.** Procédé selon l'une des revendications 6 à 8, **caractérisé en ce qu'il** comporte un ou plusieurs critères de cohérence géométrique, et **en ce qu'**un des critères consiste à supprimer les noeuds (N$_i$) du maillage initial (IPM) positionnés à une distance d'un nouveau noeud (AMV$_{ik}$, SMV$_{ik}$) inférieure à un seuil prédéterminé, ou consiste à supprimer les nouveaux noeuds (AMV$_{ik}$, SMV$_{ik}$) générés hors d'une zone prédéterminée.

**10.** Procédé selon l'une des revendications 6 à 9, **caractérisé en ce qu'il** comporte une étape (110), réalisée à l'issue du processus itératif, de comparaison des dispersions spatiales des nouveaux noeuds (AMV$_{ik}$, SMV$_{ik}$) du maillage adapté (IPMA) et des noeuds (N$_i$) du maillage initial (IPM), permettant de sélectionner entre les étapes suivantes :

- le calcul (112) du contenu électronique total vertical (VTEC$_i$) en chacun des noeuds du maillage adapté (IPMA) au moyen de l'estimateur statistique (ESC), lorsque les dispersions spatiales des nouveaux noeuds (AMV$_{ik}$, SMV$_{ik}$) sont inférieures aux dispersions spatiales des noeuds (N$_i$) du maillage initial (IPM),
- l'arrêt (111) du procédé, lorsque les dispersions spatiales des nouveaux noeuds (AMV$_{ik}$, SMV$_{ik}$) sont supé-rieures aux dispersions spatiales des noeuds (N$_i$) du maillage initial (IPM),
- l'initiation d'un second calcul (106) de raffinement du maillage appliqué sur l'ensemble des noeuds du nouveau maillage (IPMA), lorsque les dispersions spatiales des nouveaux noeuds (AMV$_{ik}$, SMV$_{ik}$) sont à la fois inférieures aux dispersions spatiales des noeuds (N$_i$) du maillage initial (IPM) et supérieures à un seuil prédéterminé,

**11.** Procédé selon l'une des revendications précédentes, **caractérisé en ce que** l'analyse statistique d'erreur (ASE) comporte les étapes suivantes réalisées successivement :

- une sélection pour chacun des noeuds (N$_i$, AMV$_{ik}$, SMV$_{ik}$) du maillage (IPM, IPMA) d'un sous-ensemble (SEP$_{i4}$, SEP$_{i5}$) de points (27) positionnés à une distance du noeud considéré (N$_i$, AMV$_{ik}$, SMV$_{ik}$) inférieure à un seuil prédéterminé (S$_4$, S$_5$),
- un calcul pour chacun des points (27) du sous-ensemble (SEP$_{i4}$, SEP$_{i5}$) d'une différence (DIFF, DIF) entre le contenu électronique total vertical (VTEC$_i$) déterminé au noeud (N$_i$, AMV$_{ik}$, SMV$_{ik}$) au moyen de l'estimateur statistique (ESC, ESCA) et le contenu électronique total vertical (VTEC) du point considéré (27),
- un calcul pour chacun des noeuds (N$_i$, AMV$_{ik}$, SMV$_{ik}$) d'une dispersion locale (D$_{i4}$, D$_{i5}$) des différences (DIFF, DIF),
- une sélection entre deux niveaux d'erreurs prédéterminés, une erreur faible (E$_1$) ou une erreur forte (E$_2$), en fonction d'une valeur de dispersion locale (D$_{i4}$, D$_{i5}$).

**12.** Procédé selon l'une des revendications précédentes, **caractérisé en ce que** les analyses statistiques de dispersion (ASD) et d'erreur (ASE) ne prennent en compte qu'un sous-ensemble des noeuds (Ni, AMVik, SMVik) du maillage de la surface (ITL) sélectionnés à partir d'un ou plusieurs critères géométrique, et **en ce qu'**un des critères portent sur la position des noeuds par rapport au soleil.

**EP 2 637 040 B1**

**Patentansprüche**

1. Adaptives Verfahren zum Schätzen des Elektronengehalts der Ionosphäre, das die folgenden Schritte beinhaltet:

    - Sammeln (101) eines Satzes von Messwerten (MSS), die von mehreren bodengestützten Empfangsbaken (21) erfasst werden, die von mehreren sendenden Navigationssatelliten (24) im Orbit gesendete Funkfrequenzsignale (23) empfangen;
    - Berechnen (102), für jedes der Signale (23) des Satzes von Messwerten (MSS), von Raumkoordinaten des Schnittpunkts (IPP) zwischen einer Signalsendeachse (23) und einer die Erde umgebenden Schicht (ITL) und einem an diesem Schnittpunkt (IPP) ermittelten vertikalen Gesamtelektronengehalt (VTEC), wodurch ein Cluster (26) von Punkten (27) bestehend aus Raumkoordinaten des Schnittpunkts (IPP) und einem vertikalen Gesamtelektronengehalt (VTEC) definiert werden;

    wobei das Verfahren **dadurch gekennzeichnet ist, dass** es ferner die folgenden Schritte beinhaltet:

    - Berechnen (103), mittels eines statistischen Schätzglieds (ESC), eines vertikalen Gesamtelektronengehalts (VTEC$_i$) für jeden der Knoten (N$_i$) eines anfänglichen Netzes (IPM) der Schicht (ITL);
    - statistisches Analysieren der Dispersion (ASD) des vertikalen Gesamtelektronengehalts (VTEC$_i$) an jedem der Knoten (N$_i$) des anfänglichen Netzes (IPM), so dass zwischen zwei vorbestimmten Störniveaus, einer schwachen Störung (P$_1$) und einer starken Störung (P$_2$), der Ionosphäre ausgewählt werden kann;
    - einen Schritt, der Folgendes beinhaltet:

        • eine Berechnung (105), im Falle einer schwachen Störung (P$_1$), die es zulässt, ein adaptiertes statistisches Schätzglied (ESCA) auf der Basis des anfänglichen statistischen Schätzglieds (ESC) zu definieren;
        • eine Berechnung (106), im Falle einer starken Störung (P$_2$), die es zulässt, ein neues adaptiertes Netz (IPMA) der Schicht (ITL) auf der Basis des anfänglichen Netzes (IPM) zu erzeugen;

    - statistisches Analysieren eines Fehlers (ASE) des ermittelten vertikalen Gesamtelektronengehalts (VTEC$_i$) mittels des adaptierten statistischen Schätzgliedes (ESCA) und des anfänglichen Netzes (IPM) im Falle einer schwachen Störung (P$_1$) oder mittels des anfänglichen statistischen Schätzgliedes (ESC) und des adaptierten Netzes (IPMA) im Falle einer starken Störung (P$_2$), wobei die statistische Fehleranalyse (ASE) das Auswählen zwischen zwei vorbestimmten Fehlerniveaus zulässt, einem schwachen Fehler (E$_1$), der die Validierung der Adaption des Verfahrens (114) beinhaltet, und einem starken Fehler (E$_2$), der das Stoppen des Verfahrens (15) beinhaltet.

2. Verfahren nach Anspruch 1, **dadurch gekennzeichnet, dass** das anfängliche statistische Schätzglied (ESC) einen vertikalen Gesamtelektronengehalt (VTEC$_i$) an jedem der Knoten (N$_i$, AMV$_{ik}$, SMV$_{ik}$) des Netzes (IPM, IPMA) mittels eines KalmanFilters unter Berücksichtigung der Punkte (27) des Clusters (26) ermittelt, die sich in einem Abstand von dem betrachteten Knoten (N$_i$, AMV$_{ik}$, SMV$_{ik}$) befinden, der kleiner ist als eine vorbestimmte Schwelle (S).

3. Verfahren nach einem der vorherigen Ansprüche, **dadurch gekennzeichnet, dass** das anfängliche Netz (IPM) der Schicht (ITL) ein gleichmäßiges Polyeder bildet, das auf der Erde zentriert ist, mit eintausendzweihundertachtzig dreieckigen Flächen, und dadurch, dass sich jeder der Knoten (N$_i$) des anfänglichen Netzes (IPM) auf einer eingestellten Solarzeit befindet.

4. Verfahren nach einem der vorherigen Ansprüche, **dadurch gekennzeichnet, dass** die statistische Dispersionsanalyse (ASD) die folgenden nacheinander ausgeführten Schritte beinhaltet:

    - Auswählen, für jeden der Knoten (N$_i$) des anfänglichen Netzes (IPM), einer Teilmenge (SEP$_i$) von Punkten (27), die in einem Abstand von dem betrachteten Knoten (N$_i$) positioniert sind, der kleiner ist als eine vorbestimmte Schwelle (S$_1$);
    - Berechnen, für jeden der Knoten (N$_i$) des anfänglichen Netzes (IPM), einer mit statistischen Methoden errechneten lokalen Dispersion (D$_i$) des vertikalen Gesamtelektronengehalts (VTEC) der Punkte (27) der Teilmenge (SEP$_i$);
    - Auswählen zwischen zwei Störniveaus der Ionosphäre (P$_1$, P$_2$), wenigstens in Abhängigkeit von einem lokalen Dispersionswert (D$_i$).

5. Verfahren nach einem der vorherigen Ansprüche, **dadurch gekennzeichnet, dass** es einen Schritt (105) des Berechnens eines adaptierten statistischen Schätzgliedes (ESCA) zum Berechnen, zusätzlich zu dem vertikalen Gesamtelektronengehalt ($VTEC_i$) an jedem der Knoten ($N_1$), eines räumlichen Verlaufsgradienten ($GSE_i$) des vertikalen Gesamtelektronengehalts in der Nähe des betrachteten Knotens ($N_i$) beinhaltet.

6. Verfahren nach einem der vorherigen Ansprüche, **dadurch gekennzeichnet, dass** es einen Schritt (106) des Berechnens eines auf der Basis des anfänglichen Netzes (IPM) ermittelten adaptierten Netzes (IPMA) gemäß einem iterativen Prozess beinhaltet, der auf jeden der Knoten ($N_i$) des anfänglichen Netzes (IPM) angewandt wird, der die folgenden Rechenschritte beinhaltet:

- taxonomisches Analysieren einer Verteilung ($DISTi_i$) von Punkten (27), die sich in einem Abstand von dem betrachteten Knoten ($N_i$) befinden, der kleiner ist als eine vorbestimmte Schwelle ($S_3$), um entweder:

• wenn die Verteilung ($DIST_i$) aggregierbar ist, mehrere Aggregate ($SEP_{ik}$) von Punkten (27) zu definieren, für die die Werte des vertikalen Gesamtelektronengehalts (VTEC) homogen sind, und einen Schritt (108) des Verfeinerns des Netzes (IPM) nach Unterklasse ($D_A$) auszuwählen; oder
• wenn die Verteilung ($DIST_i$) stochastisch ist, einen Schritt (109) zum Verfeinern des Netzes (IPM) durch Subdivision ($D_s$) auszuwählen;

- Hinzufügen eines neuen Netzknotens ($AMV_{ik}$) durch Aggregate ($SEP_{ik}$), falls die Verteilung ($DIST_i$) aggregierbar ist, wobei die Position des neuen Knotens ($AMV_{ik}$) einem Schwerpunkt der Punkte (27) des Aggregats ($SEP_{ik}$) entspricht;
- Hinzufügen mehrerer neuer Netzknoten ($SMV_{ik}$), falls die Verteilung ($DIST_i$) stochastisch ist, wobei Anzahl und Position der neuen Knoten ($SMV_{ik}$) in Abhängigkeit von existierenden Knoten ($N_i$) und einer vorbestimmten Subdivisionsregel definiert sind.

7. Verfahren nach Anspruch 6, **dadurch gekennzeichnet, dass** die Position eines neuen Knotens ($AMV_{ik}$) im Falle einer aggregierbaren Verteilung ($DIST_i$) dem Schwerpunkt der Punkte (27) des Aggregats ($SEP_{ik}$) entspricht, für das eine Gewichtung ($P_{ik}$) von einem Winkel abhängig ist, der zwischen der Signalsendeachse (23) des betrachteten Punkts (27) und einer durch diesen Punkt (27) verlaufenden vertikalen Achse relativ zur Erde (22) gebildet wird, wobei die Gewichtung die Punkte (27) favorisiert, die auf der Basis eines Signals (23) ermittelt werden, dessen Sendeachse im Wesentlichen vertikal ist.

8. Verfahren nach Anspruch 6 oder 7, **dadurch gekennzeichnet, dass** es wenigstens eine der folgenden zwei Subdivisionsregeln beinhaltet, die das Addieren mehrerer neuer Netzknoten ($SMV_{ik}$) im Falle einer stochastischen Verteilung ($DIST_i$) zulassen:

- ein neuer Knoten ($SMV_{ik}$) ist zwischen dem betrachteten Knoten ($N_i$) und jedem der damit verbundenen Nachbarknoten (82) positioniert, wobei jeder neue Knoten ($SMV_{ik}$) auf der Schicht (ITL) im gleichen Abstand von dem Knoten ($N_i$) und von dem betrachteten Nachbarknoten (82) positioniert ist, um den Abstand zu minimieren, der ihn von dem betrachteten Knoten ($N_i$) trennt;
- ein neuer Knoten ($SMV_{ik}$) ist für jede der Flächen (81) positioniert, zu denen der betrachtete Knoten ($N_i$) gehört, wobei die Position des neuen Knotens ($SMV_{ik}$) einem Schwerpunkt der Knoten ($N_i$, 82) der betrachteten Fläche (81) entspricht.

9. Verfahren nach einem der Ansprüche 6 bis 8, **dadurch gekennzeichnet, dass** es ein oder mehrere geometrische Kohärenzkriterien umfasst, und dadurch, dass eines der Kriterien darin besteht, die Knoten ($N_i$) von dem anfänglichen Netz (IPM) zu entfernen, die in einem Abstand von einem neuen Knoten ($AMV_{ik}$. $SMV_{ik}$) positioniert sind, der kleiner ist als eine vorbestimmte Schwelle, oder darin besteht, die neuen Knoten ($AMV_{ik}$, $SMV_{ik}$) zu entfernen, die außerhalb einer vorbestimmten Zone erzeugt wurden.

10. Verfahren nach einem der Ansprüche 6 bis 9, **dadurch gekennzeichnet, dass** es einen nach Abschluss des iterativen Prozesses ausgeführten Schritt (110) des Vergleichens von Raumdispersionen der neuen Knoten ($AMV_{ik}$, $SMV_{ik}$) des adaptierten Netzes (IPMA) und der Knoten ($N_i$) des anfänglichen Netzes (IPM) beinhaltet, so dass zwischen den folgenden Schritten ausgewählt werden kann:

- Berechnen (112) des vertikalen Gesamtelektronengehalts ($VTEC_i$) an jedem der Knoten des adaptierten Netzes (IPMA) mit Hilfe des statistischen Schätzglieds (ESC), wenn die Raumdispersionen der neuen Knoten ($AMV_{ik}$, $SMV_{ik}$) kleiner sind als die Raumdispersionen der Knoten ($N_i$) des anfänglichen Netzes (IPM);

- Stoppen (111) des Verfahrens, wenn die Raumdispersionen der neuen Knoten ($AMV_{ik}$, $SMV_{ik}$) größer sind als die Raumdispersionen der Knoten ($N_i$) des anfänglichen Netzes (IPM);
- Einleiten einer zweiten Berechnung (106) des Verfeinerns des auf den Satz von Knoten des neuen Netzes (IPMA) angewandten Netzes, wenn die Raumdispersionen der neuen Knoten ($AMV_{ik}$, $SMV_{ik}$) gleichzeitig kleiner als die Raumdispersionen der Knoten ($N_i$) des anfänglichen Netzes (IPM) und größer als eine vorbestimmte Schwelle sind.

11. Verfahren nach einem der vorherigen Ansprüche, **dadurch gekennzeichnet, dass** die statistische Fehleranalyse (ASE) die folgenden nacheinander ausgeführten Schritte beinhaltet:

- Auswählen, für jeden der Knoten ($N_i$, $AMV_{ik}$, $SMV_{ik}$) des Netzes (IPM, IPMA), einer Teilmenge ($SEP_{i4}$, $SEP_{i5}$) von Punkten (27), die in einem Abstand von dem betrachteten Knoten ($N_i$, $AMV_{ik}$, $SMV_{ik}$) positioniert sind, der kleiner ist als eine vorbestimmte Schwelle ($S_4$, $S_5$);
- Berechnen, für jeden der Punkte (27) der Teilmenge ($SEP_{i4}$, $SEP_{i5}$), einer Differenz (DIFF, DIF) zwischen dem auf dem Knoten ($N_i$, $AMV_{ik}$, $SMV_{ik}$) mittels des statistischen Schätzglieds (ESC, ESCA) ermittelten vertikalen Gesamtelektronengehalt ($VTEC_i$) und dem vertikalen Gesamtelektronengehalt (VTEC) des betrachteten Punkts (27);
- Berechnen, für jeden der Knoten ($N_i$, $AMV_{ik}$, $SMV_{ik}$), einer lokalen Dispersion ($Di_4$, $D_{i5}$) der Differenzen (DIFF, DIF);
- Auswählen zwischen zwei vorbestimmten Fehlerniveaus, einem schwachen Fehler ($E_1$) und einem starken Fehler ($E_2$), in Abhängigkeit von einem lokalen Dispersionswert ($D_{i4}$, $D_{i5}$).

12. Verfahren nach einem der vorherigen Ansprüche, **dadurch gekennzeichnet, dass** die statistische Dispersions- (ASD) und Fehler- (ASE) -analyse nur eine Teilmenge der Knoten ($N_i$, $AMV_{ik}$, $SMV_{ik}$) des Netzes der Schicht (ITL) berücksichtigen, die auf der Basis von einem oder mehreren geometrischen Kriterien ausgewählt sind, und dadurch, dass eines der Kriterien auf der Position der Knoten relativ zur Sonne basiert.

## Claims

1. An adaptive method for estimating the electron content of the ionosphere, comprising the following steps:

- collecting (101) a set of measurements (MSS) carried out by a plurality of ground-based reception beacons (21) receiving radiofrequency signals (23) transmitted by a plurality of transmitting navigation satellites (24) in orbit;
- computing (102), for each of said signals (23) of said set of measurements (MSS), space coordinates of the pierce point (IPP) between a transmission axis of said signal (23) and a layer (ITL) surrounding the earth and a vertical total electron content (VTEC) determined at said pierce point (IPP), with a cluster (26) of points (27) made up of space coordinates of said pierce point (IPP) and a vertical total electron content (VTEC) thus being defined;

said method being **characterised in that** it further comprises the following steps:

- computing (103), by means of a statistical estimator (ESC), a vertical total electron content ($VTEC_i$) for each of the nodes ($N_i$) of an initial mesh (IPM) of the layer (ITL);
- performing a statistical dispersion analysis (ASD) of the vertical total electron content ($VTEC_i$) on each of said nodes ($N_i$) of said initial mesh (IPM), allowing a selection to be made between two predetermined disturbance levels, a weak disturbance ($P_1$) or a strong disturbance ($P_2$), of the ionosphere;
- a step comprising:

• a computation (105), in the case of a weak disturbance ($P_1$), for defining an adapted statistical estimator (ESCA) on the basis of said initial statistical estimator (ESC);
• a computation (106), in the case of a strong disturbance ($P_2$), for generating a new adapted mesh (IPMA) of said layer (ITL) on the basis of said initial mesh (IPM);

- performing a statistical error analysis (ASE) of the determined vertical total electron content ($VTEC_i$) by means of said adapted statistical estimator (ESCA) and of said initial mesh (IPM) in the case of a weak disturbance ($P_1$) or by means of said initial statistical estimator (ESC) and of said adapted mesh (IPMA) in the case of a

strong disturbance ($P_2$), said statistical error analysis (ASE) allowing a selection to be made between two predetermined error levels, a weak error ($E_1$) that involves validating the adaptation of the method (114) or a strong error ($E_2$) that involves stopping the method (115).

2. The method according to claim 1, **characterised in that** said initial statistical estimator (ESC) determines a vertical total electron content ($VTEC_i$) on each of the nodes ($N_i$, $AMV_{ik}$, $SMV_{ik}$) of the mesh (IPM, IPMA) by means of a Kalman filter taking into account said points (27) of said cluster (26) positioned at a distance from the considered node ($N_i$, $AMV_{ik}$, $SMV_{ik}$) that is less than a predetermined threshold (S).

3. The method according to any one of the preceding claims, **characterised in that** said initial mesh (IPM) of said layer (ITL) forms an even polyhedral centred on the earth, having one thousand two hundred and eighty triangular faces, and **in that** each of said nodes ($N_i$) of said initial mesh (IPM) is at a set solar time.

4. The method according to any one of the preceding claims, **characterised in that** said statistical dispersion analysis (ASD) comprises the following steps carried out successively:

- selecting, for each of said nodes ($N_i$) of said initial mesh (IPM), a sub-set ($SEP_i$) of points (27) positioned at a distance from the considered node ($N_i$) that is less than a predetermined threshold ($S_1$);
- computing, for each of said nodes ($N_i$) of said initial mesh (IPM), a local dispersion ($D_i$), computed by statistical methods, of the vertical total electron content (VTEC) of said points (27) of said sub-set ($SEP_i$);
- selecting between two disturbance levels of the ionosphere ($P_1$, $P_2$), at least as a function of a local dispersion value ($D_i$).

5. The method according to any one of the preceding claims, **characterised in that** it comprises a step (105) of computing an adapted statistical estimator (ESCA) for computing, in addition to the vertical total electron content ($VTEC_i$) on each of said nodes ($N_i$), a spatial trend gradient ($GSE_i$) of the vertical total electron content in the vicinity of the considered node ($N_i$).

6. The method according to any one of the preceding claims, **characterised in that** it comprises a step (106) of computing an adapted mesh (IPMA), determined on the basis of said initial mesh (IPM), according to an iterative process applied to each of said nodes ($N_i$) of said initial mesh (IPM), comprising the following computation steps:

- a taxonomic analysis of a distribution ($DIST_i$) of points (27) positioned at a distance from the considered node ($N_i$) that is lower than a predetermined threshold ($S_3$), for either:

• defining, when said distribution ($DIST_i$) can be aggregated, a plurality of aggregates ($SEP_{ik}$) of points (27), for which the vertical total electron content (VTEC) values are homogenous, and selecting a step (108) of refining said mesh (IPM) by sub-category ($D_A$);
• selecting, when said distribution ($DIST_i$) is stochastic, a step (109) of refining said mesh (IPM) by subdivision ($D_s$);

- adding a new mesh node ($AMV_{ik}$) by aggregates ($SEP_{ik}$) in the case that said distribution ($DIST_i$) can be aggregated, the position of said new node ($AMV_{ik}$) corresponding to a barycentre of said points (27) of said aggregate ($SEP_{ik}$);
- adding a plurality of new mesh nodes ($SMV_{ik}$) in the case that said distribution ($DIST_i$) is stochastic, the number and the position of said new nodes ($SMV_{ik}$) being defined as a function of existing nodes ($N_i$) and of a predetermined subdivision rule.

7. The method according to claim 6, **characterised in that** the position of a new node ($AMV_{ik}$) in the case of a distribution ($DIST_i$) that can be aggregated, corresponds to the barycentre of said points (27) of said aggregate ($SEP_{ik}$), for which a weighting ($P_{ik}$) depends on an angle formed between the transmission axis of said signal (23) of the considered point (27) and a vertical axis relative to the earth (22) that passes through said point (27), the weighting promoting the points (27) that are determined on the basis of a signal (23), the transmission axis of which is substantially vertical.

8. The method according to claim 6 or 7, **characterised in that** it comprises at least one of the following two subdivision rules, allowing the addition of a plurality of new mesh nodes ($SMV_{ik}$) in the case of stochastic distribution ($DIST_i$):

- a new node ($SMV_{ik}$) is positioned between the considered node ($N_i$) and each of the neighbouring nodes (82) connected thereto, each new node ($SMV_{ik}$) being positioned on said layer (ITL) at an equal distance from said node ($N_i$) and from said considered neighbouring node (82), so as to minimise the distance separating it from the considered node ($N_i$);

- a new node ($SMV_{ik}$) is positioned for each of the faces (81) to which the considered node ($N_i$) belongs, the position of said new node ($SMV_{ik}$) corresponding to a barycentre of said nodes ($N_i$, 82) of the considered face (81).

9. The method according to any one of claims 6 to 8, **characterised in that** it comprises one or more geometric coherence criteria, and **in that** one of the criteria involves removing said nodes ($N_i$) from said initial mesh (IPM) positioned at a distance from a new node ($AMV_{ik}$, $SMV_{ik}$) that is less than a predetermined threshold or involves removing said new nodes ($AMV_{ik}$, $SMV_{ik}$) generated outside a predetermined zone.

10. The method according to any one of claims 6 to 9, **characterised in that** it comprises a step (110), carried out on completion of the iterative process, of comparing space dispersions of new nodes ($AMV_{ik}$, $SMV_{ik}$) of said adapted mesh (IPMA) and nodes ($N_i$) of said initial mesh (IPM), allowing a selection to be made between the following steps:

- computing (112) the vertical total electron content ($VTEC_i$) at each of the nodes of said adapted mesh (IPMA) by means of said statistical estimator (ESC), when the space dispersions of said new nodes ($AMV_{ik}$, $SMV_{ik}$) are less than the space dispersions of said nodes ($N_i$) of said initial mesh (IPM);

- stopping (111) the method when the space dispersions of said new nodes ($AMV_{ik}$, $SMV_{ik}$) are higher than the space dispersions of said nodes ($N_i$) of said initial mesh (IPM);

- initiating a second computation (106) of refining the mesh applied to the set of nodes of said new mesh (IPMA) when the space dispersions of said new nodes ($AMV_{ik}$, $SMV_{ik}$) are both less than the space dispersions of said nodes ($N_i$) of said initial mesh (IPM) and are higher than a predetermined threshold.

11. The method according to any one of the preceding claims, **characterised in that** said statistical error analysis (ASE) comprises the following steps carried out successively:

- selecting, for each of the nodes ($N_i$, $AMV_{ik}$, $SMV_{ik}$) of the mesh (IPM, IPMA), a sub-set ($SEP_{i4}$, $SEP_{i5}$) of points (27) positioned at a distance from the considered node ($N_i$, $AMV_{ik}$, $SMV_{ik}$) that is less than a predetermined threshold ($S_4$, $S_5$);

- computing, for each of said points (27) of said sub-set ($SEP_{i4}$, $SEP_{i5}$), a difference (DIFF, DIF) between the vertical total electron content ($VTEC_i$) determined on the node ($N_i$, $AMV_{ik}$, $SMV_{ik}$) by means of said statistical estimator (ESC, ESCA) and the vertical total electron content (VTEC) of the considered point (27);

- computing, for each of the nodes ($N_i$, $AMV_{ik}$, $SMV_{ik}$), a local dispersion ($D_{i4}$, $D_{i5}$) of the differences (DIFF, DIF);

- selecting between two predetermined error levels, a weak error ($E_1$) or a strong error ($E_2$), as a function of a local dispersion value ($D_{i4}$, $D_{i5}$).

12. The method according to any one of the preceding claims, **characterised in that** said statistical dispersion (ASD) and error (ASE) analyses only take into account one sub-set of the nodes ($N_i$, $AMV_{ik}$, $SMV_{ik}$) of the mesh of said layer (ITL) selected on the basis of one or more geometric criteria, and **in that** one of the criteria is based on the position of the nodes relative to the sun.

FIG.1

FIG.2a

FIG.2b

FIG.3a

FIG.3b

101 — Collecte d'un ensemble de mesures MSS

102 — Calcul d'un nuage de points

103 — Calcul VTEC$_i$ pour maillage IPM et estimateur statistique ESC

104 — Analyse statistique de dispersion ASD

$P_1$

$P_2$

106 — Calcul du maillage adapté IPMA

Itération nœud $N_{i+1}$

105 — Calcul de l'estimateur statistique adapté ESCA

107 — Analyse taxonomique du nœud $N_i$

$D_S$

$D_A$

108 — Raffinement maillage par agrégat

Raffinement maillage par subdivision

109

Analyse dispersion spatiale — 110

112 — Calcul VTEC$_i$ après adaptation

Arrêt du procédé

111

113 — Analyse statistique d'erreur ASE

$E_1$

$E_2$

114 — Transmission des corrections GNSS

Arrêt du procédé

115

FIG.4

VTEC

$N_1$  $N_2$  $N_3$  $N_4$  $N_5$  $N_k$

## FIG.5a

VTEC

$N_1$  $N_2$  $N_3$  $N_4$  $N_5$  $N_k$

## FIG.5b

27

$DIST_i$

$S_2$

TMV

$N_i$

## FIG.6

FIG.7a

FIG.7b

FIG.8a

FIG.8b

FIG.9a

FIG.9b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5428358 A
- WO 2007032947 A

- US 2006017610 A

**Littérature non-brevet citée dans la description**

- **ELLIOTT D. KAPLAN.** Understanding GPS Principes and Applications. Artech House, 2005
- **XINGLIANG HUO et al.** Monitoring the Daytime Variations of Equatorial Ionospheric Anomaly Using ION-EX Data and Champ GPS Data. *IEEE Transactions,* 01 Janvier 2011, vol. 49 (1

- Radio Technical Commission for Aeronautics. Minimum Operational Performance Standards for Global Positioning System / Wide Area Augmentation System Airborne Equipment : RTCA DO-229D. RTCA, Décembre 2006